# EUROPÄISCHE PATENTSCHRIFT

(11) **EP 3 027 475 B1**
(45) Veröffentlichungstag und Bekanntmachung des Hinweises auf die Patenterteilung: **22.11.2017**
(21) Anmeldenummer: 15709497.0
(22) Anmeldetag: 13.03.2015
(51) Int. Cl.: B60S 3/04, B08B 7/00, C11D 11/00, C11D 3/04, C11D 3/22, C11D 3/37

(54) **FAHRZEUGWASCHANLAGE UND VERFAHREN ZUR REINIGUNG VON FAHRZEUGEN UND REINIGUNGSMITTEL**
VEHICLE-WASHING INSTALLATION, METHOD FOR CLEANING VEHICLES, AND CLEANING AGENT
STATION DE LAVAGE DE VÉHICULES, PROCÉDÉ DE NETTOYAGE DE VÉHICULES ET AGENT DE NETTOYAGE

(30) Priorität: 26.03.2014 DE 102014104238
(43) Veröffentlichungstag der Anmeldung: 08.06.2016
(73) Patentinhaber: WashTec Holding GmbH, 86153 Augsburg (DE)
(72) Erfinder: AUER, Robert, 86391 Stadtbergen (DE); SATTLER, Andreas, 81543 München (DE)
(74) Vertreter: Reitstötter Kinzebach
(86) Internationale Anmeldenummer: PCT/EP2015/055262
(87) Internationale Veröffentlichungsnummer: WO 2015/144449

(56) Entgegenhaltungen:
- WO-A1-96/40454
- JP-A- H09 277 913
- US-A- 3 994 744
- US-A- 5 421 897
- US-A- 5 681 399

## Beschreibung

Die vorliegende Erfindung betrifft eine Fahrzeugwaschanlage nach dem Oberbegriff des Anspruchs 1 sowie ein Verfahren zur Reinigung von Fahrzeugen unter Verwendung von einem aus zwei Komponenten bestehenden, filmbildenden Reinigungsmittel.

Beim Reinigen von Fahrzeugen, insbesondere von Kraftfahrzeugen, in üblichen Waschanlagen, entsteht häufig das Problem, dass die Oberfläche bei der Reinigung mit einem Hochdruck-Wasserstrahl immer noch eine gewisse Partikel-Staubschicht aufweist, welche die Lackoberfläche stumpf erscheinen lässt. Trotz Einsatz von Wasser, das mit einem hohen Druck mit Hochdruck-Sprühgeräten maschinell oder manuell aufgetragen wird, und ggf unter Zusatz von Detergentien bei einer Vorbehandlung, gelingt es in vielen Fällen nicht, den anhaftenden Partikelschmutz vollständig zu beseitigen. Zu erkennen ist das unzureichende Ergebnis daran, dass ein etwas matter Film auf der Lackoberfläche verbleibt, der beispielweise durch Berühren abwischbar ist und schmiert. Ein solcher Film ist beanstandenswert und sollte neben ästhetischen Gründen auch aus Lackschutzgründen beseitigt werden, da der Partikelfilm Anlass zur weiteren Akkumulation von Schmutz gibt und somit zu einer langfristigen Schädigung der Lackschicht führen kann. Der Partikelschmutz besteht aus Kleinstpartikeln von Mineralien oder Salzen, an die zum Teil Rußpartikel, Fett, organische Stoffe pflanzlichen oder tierischen Ursprungs und viele andere im Straßenschmutz vorkommende Stoffe gebunden sind. Der Grund für das Anhaften dieser Partikel hat vielfältige Ursachen. Zum einen ist eine übliche Adhäsionskraft, die beispielsweise durch elektrostatische Coulomb-Kräfte entsteht, zu beachten. Zum anderen tragen Partikel Ladungen unterschiedlichen Vorzeichens mit sich, ziehen sich an und haften somit filmartig auf der Oberfläche. Unterschiedliche Ladungen können z.B. tribologisch beim Aufprall der Partikel auf die Karosserieoberfläche entstehen. Außerdem gibt es eine gewisse Vorgeschichte, d.h. zum Beispiel können Kontakt und Reibung bereits vor dem Aufprall zu geladenen Partikeln geführt haben. Neben elektrostatischen Kräften spielen auch van-der-Waals-Kräfte eine Rolle, d.h. die Dipolmomente zwischen dem Material der Partikel und der Oberfläche des Fahrzeugs können so geartet sein, dass eine Anziehung besteht. Weiterhin ist die Oberflächenrauigkeit zu beachten. Partikel im Nanometerbereich und hydrophober Schmutz können sich z.B. über van-der-Waals-Kräfte in der Oberflächenrauigkeit festsetzen und ähnlich geartete Partikel weiter anhäufen.

Aus den vorgenannten Gründen besteht der Wunsch, die bislang nach einer konventionellen Fahrzeugwäsche noch an der Fahrzeugoberfläche haftenden Partikel zu beseitigen. Dieser Vorgang sollte im Wesentlichen berührungsfrei erfolgen, d.h. der Einsatz mechanischer Reinigungsvorrichtungen, wie Bürsten usw. ist nicht erforderlich.

Mit einem in Fahrzeugwaschanlagen üblichen Hochdruckwasserstrahl allein kann der Partikelschmutz nicht vollständig beseitigt werden. Aus diesem Grund wurde überlegt, die Partikel durch einen Hilfsgegenstand, der die oben genannten Kräfte überkompensiert oder ausgleicht, von der Fahrzeugoberfläche abzuheben.

Die DE 27 22 390 A1 betrifft ein Verfahren zum Reinigen von Gegenständen, insbesondere Schallplatten und Schallplattenmatrizen, wobei gegebenenfalls nach Spülen der zu reinigenden Flächen mit Detergentien auf diese eine Flüssigkeit aufgebracht, insbesondere aufgesprüht wird, die sich in einen abziehbaren Film umwandelt und wobei der trockene Film dann abgezogen wird. Die Flüssigkeit zur Durchführung des Verfahrens greift den Gegenstand nicht an, benetzt dessen Oberfläche vollständig und besitzt ein gutes Kriechvermögen, ohne Blasen zu bilden und sie erstarrt zu einem von der Oberfläche ohne Rückstände abziehbaren Film unter derartigen Bedingungen, die dem zu reinigenden Gegenstand nicht schaden, wobei beim Abziehen Staubpartikel und dergleichen mitgenommen werden. Der Film besteht aus Polyvinylalkohol mit einem mittleren Molekulargewicht von 80 000, Fettsäure, und vorzugsweise Triethylenglycol. Die zu reinigende Schallplatte wird mit dieser Lösung bestrichen, besprüht bzw. in diese eingetaucht. Der nach dem Trocknen gebildete Film wird schließlich unter Mitnahme der Schmutzpartikel aus den Schallplattenrillen abgezogen.

Die DE 29 19 886 A1 betrifft ein Verfahren zur Reinhaltung von verschmutzungsgefährdeten Innen- und Außenoberflächen, wobei ein Filmbildner eine Schutzschicht erzeugt, auf der sich der Schmutz ablagern kann und anschließend dieser abgespült wird, wobei die Schutzschicht in gewissem Umfang erhalten und erneuert wird.

Die DE 14 80 412 A1 betrifft eine Kraftfahrzeug-Waschanlage, bei der das Fahrzeug portalartige Gestelle mit allseits am Gestell aufgehängten und durch Sprühdüsen beaufschlagten Tüchern durchläuft.

Somit stellt DE 27 22 390 A1 ein Verfahren bereit, mit dem auf einer Oberfläche befindliche Partikel mit Hilfe eines aufgebrachten, dann getrockneten und schließlich mechanisch abgezogenen Films entfernt werden. Eine wesentliche Voraussetzung dafür ist, dass der Film auf dem zu reinigenden Gegenstand trocken ist. Die DE 29 19 886 A1 versieht eine Oberfläche mit einer Schicht, die den Gegenstand vor Verschmutzung schützt bzw. die Verschmutzung aufnimmt. Voraussetzung ist, dass die Schicht auf der Oberfläche getrocknet ist. Anschließend wird die Schicht zusammen mit der darauf befindlichen Verschmutzung beseitigt. Beiden Lösungen ist gemeinsam, dass sie ein Einkomponentensystem darstellen. Die Tücher in der DE 14 80 412 A1 liegen zwar flächig an, bei Bewegung wird der Schmutz zwar gelöst aber auf dem Lack verschoben und kann somit Kratzer hinterlassen.

Die WO 96/40454 A1 betrifft das kontaktlose Reinigen von Gegenständen, wobei eine Reinigungslösung auf den Gegenstand aufgebracht wird, bis ein Film die Oberfläche bedeckt. Dabei verfestigt sich der Film um die Schmutzpartikel, die dann mit dem Film durch einen Wasserstrahl vom Gegenstand abgelöst werden. Die Reinigungslösung wird dabei mittels einer Mischdüse mit einem Polymer gemischt und gemeinsam mit diesem auf den Gegenstand aufgesprüht. Nachteilig ist, dass die Mischdüse verstopfen kann und aufgrund des sich bereits unmittelbar nach dem Vermischen verdickenden Gemischs eine flächendeckende Benetzung des Gegenstandes nicht sichergestellt werden kann.

Die DE 23 20 925 C1 betrifft ein Verfahren und eine Vorrichtung zum Besprühen von Fahrzeugen in einer Waschanlage, wobei auf das Fahrzeug vor Beginn der Wäsche eine waschmittelhaltige Lösung in kurzer Zeit aufgebracht, dann das Fahrzeug gewaschen und die Lösung abgespült und erst anschließend nach Beendigung des Wasch- und Abspülvorgangs mit einer Konservierungsflüssigkeit in ebenfalls kurzer Zeit überzogen wird. Dabei werden die Lösung bzw. die Flüssigkeit vor Beginn bzw. nach Beendigung des Wasch- bzw. Trocknungsvorgangs zunächst auf das eine Fahrzeugende und dann über das Fahrzeug bis zum anderen Fahrzeugende nach Art eines Gießvorgangs aufgebracht.

JP H09-277913 offenbart eine Fahrzeugwaschanlage, bei der ein wasserlösliches Polymer auf das Fahrzeug gesprüht und anschließend abgespritzt wird.

Eine Aufgabe der Erfindung besteht daher darin, ein für eine Fahrzeugwaschanlage, insbesondere Portalwaschanlage oder Waschstraße, geeignetes Verfahren bereitzustellen, bei dem ein Trocknen des gebildeten Films nicht erforderlich ist, wohl aber durch einen Hochdruck-Wasserstrahl mechanisches Ablösen des Films die Verschmutzung von der Fahrzeugoberfläche beseitigt. Eine weitere Aufgabe besteht darin, dass die für die Ausführung des Verfahrens verwendeten Mittel auf Wasserbasis beruhen, kostengünstig zur Verfügung stehen sollen und zudem ökologisch verträglich sein sollen. Das Reinigungsmittel soll zudem in Fahrzeugwaschanlagen eingesetzt werden können, die mit üblichen Standardbauteilen ausgestattet sind.

Gelöst wird diese Aufgabe durch eine Fahrzeugwaschanlage mit den Merkmalen des Anspruchs 1 und ein Verfahren mit den Merkmalen des Anspruchs 3. Bevorzugte Ausführungen und vorteilhafte Weiterbildungen der Erfindung sind in den abhängigen Ansprüchen angegeben.

Durch die Erfindung wird durch Aufbringen eines temporären Films ein Zustand erreicht, bei dem die Kraft der Hochdruckreinigung ausreicht, um Partikel, die durch Kräfte, wie elektrostatische Coulomb-Kräfte, van-der-Waalsche Kräfte, kohäsiver oder adhäsiver Verbund mit anderen Schmutzstoffen, wie Öl und andere hydrophobe Stoffe, an der Oberfläche haften, von dieser zu lösen, wobei die an dem Film haftenden Partikel zusammen mit diesem durch druckbeaufschlagtes Fluid, insbesondere Wasser, ggf. auch durch Waschbürsten entfernt werden.

Erfindungsgemäß ist bei der eingangs genannten Fahrzeugwaschanlage eine Auftragseinrichtung zum Aufbringen einer ersten Komponente A, umfassend mindestens ein filmbildendes Polymer in einer im Wesentlichen wässrigen Lösung, und zum Aufbringen einer zweiten Komponente B, umfassend mindestens einen Härter in einer im Wesentlichen wässrigen Lösung, vorgesehen.

Dabei weist die Auftragseinrichtung eine erste Auftragsvorrichtung zum Aufbringen der mindestens einen Komponente A und eine zweite Auftragsvorrichtung zum Aufbringen der mindestens einen Komponente B auf wobei, die erste Auftragsvorrichtung in Waschrichtung räumlich vor der zweiten Auftragsvorrichtung angeordnet ist. Hierdurch können die beiden Komponenten A und B im Wesentlichen zeitgleich aufgebracht werden, was insbesondere bei Portalwaschanlagen vorteilhaft ist, da der Auftrag der Komponenten dann zeitsparend in einer Überfahrt des Waschportals erfolgen kann.

Weiter kann vorteilhaft eine Vorrichtung zum Abreinigen der aus Komponente A und B gebildeten Schicht mit einem Nachreinigungsfluid, insbesondere Wasser, vorgesehen sein, die vorteilhaft als weitere Auftragsvorrichtung ausgebildet sein kann.

Bevorzugt können die obigen und nachfolgend beschriebenen Auftragsvorrichtungen ein- oder mehrteilig ausgebildete Sprühvorrichtungen mit einer oder mehreren Sprühdüsen sein.

In dem erfindungsgemäßen Verfahren zur Reinigung eines Fahrzeugs mit einem nachfolgend und in den Ansprüchen angegebenen System aus mehreren Komponenten wird eine erste Komponente A mindestens einmal auf das Fahrzeug aufgetragen und anschließend durch mindestens einmaliges Auftragen einer Komponente B ein fester oder gelartiger Film erzeugt, welcher schließlich mit druckbeaufschlagtem Nachreinigungsfluid und/oder Waschbürsten entfernt wird.

Vorteilhaft kann das Fahrzeug vor dem Auftragen der ersten Komponente A mit Vorreinigungsfluid vorgereinigt werden. Dabei können das Vorreinigungsfluid und/oder das Nachreinigungsfluid Wasser sein.

Bevorzugt kann die Komponente B mehrfach hintereinander aufgebracht werden, um die Erzeugung des Films sicherzustellen und evtl. Verdünnungseffekte der Komponente B oder zu schnell abfließende Komponente B auszugleichen.

Um die Zeit für einen Reinigungsvorgang weiter zu verkürzen, können die Komponenten A und B vorteilhaft im Wesentlichen zur gleichen Zeit, aber räumlich zueinander versetzt aufgebracht werden, wobei die Komponente A räumlich vorauseilend aufgebracht wird. Insbesondere bei einer Portalwaschanlage ergibt sich dadurch der Vorteil, dass hierdurch der Auftrag beider Komponenten A und B in einer Überfahrt über das Fahrzeug erfolgen.

Die Komponente B kann bevorzugt frühestens 100 ms, bevorzugter frühestens 1 s, und besonders bevorzugt frühestens 5 s nach dem Auftrag von Komponente A appliziert werden, so dass die Dauer der Reinigung weiter verringert wird. Weiter wird die Komponente B höchstens 15 min, bevorzugt höchstens 5 min, und besonders bevorzugt höchstens 30 s nach dem Auftrag von Komponente A appliziert, so dass die Dauer der Reinigung weiter verringert wird.

Nach dem Auftrag der Komponente B wird bevorzugt mindestens 1 s und höchstens 30 min, vorzugsweise höchstens 10 min, besonders bevorzugt höchstens 5 min, vor allem höchstens 1 min, und vorteilhaft höchstens 40 s mit der Abreinigung der aus Komponente A und B gebildeten Schicht gewartet. Hierdurch kann die Dauer der Reinigung weiter verringert werden.

Weitere Besonderheiten und Vorzüge der Erfindung ergeben sich aus der folgenden detaillierten Beschreibung der erfindungsgemäßen Fahrzeugwaschanlage, des Verfahrens und des Reinigungsmittels zur Reinigung der Oberfläche eines Fahrzeugs gemäß den nachfolgenden Ausführungsbeispielen anhand der Zeichnungen. Es zeigen
- **Fig. 1**: eine schematische Seitenansicht der Lackoberfläche eines zu reinigenden Fahrzeugs während unterschiedlicher Schritte der Reinigung;
- **Fig. 2**: den Verlauf der prozentualen Gewichtsabnahme eines in Fig. 1b gezeigten Gelfilms durch Trocknen;
- **Fig. 3**: den Verlauf der prozentualen Gewichtsabnahme einer in Fig. 1d gezeigten Schicht;
- **Fig. 4**: eine schematische Darstellung einer erfindungsgemäßen Fahrzeugwaschanlage von der Seite (a), von hinten (b) und von oben (c) mit getrenntem Auftrag der zwei Komponenten von oben und von der Seite;
- **Fig. 5**: eine schematische Darstellung der erfindungsgemäßen Fahrzeugwaschanlage aus Fig. 4 mit quasi gleichzeitigem Auftrag der zwei Komponenten von oben und von der Seite;
- **Fig. 6**: eine schematische Darstellung der Abreinigung der beiden Komponenten nach dem Auftrag in der erfindungsgemäßen Fahrzeugwaschanlage nach Fig. 4 oder 5 von der Seite (a), von hinten (b) und von oben (c);

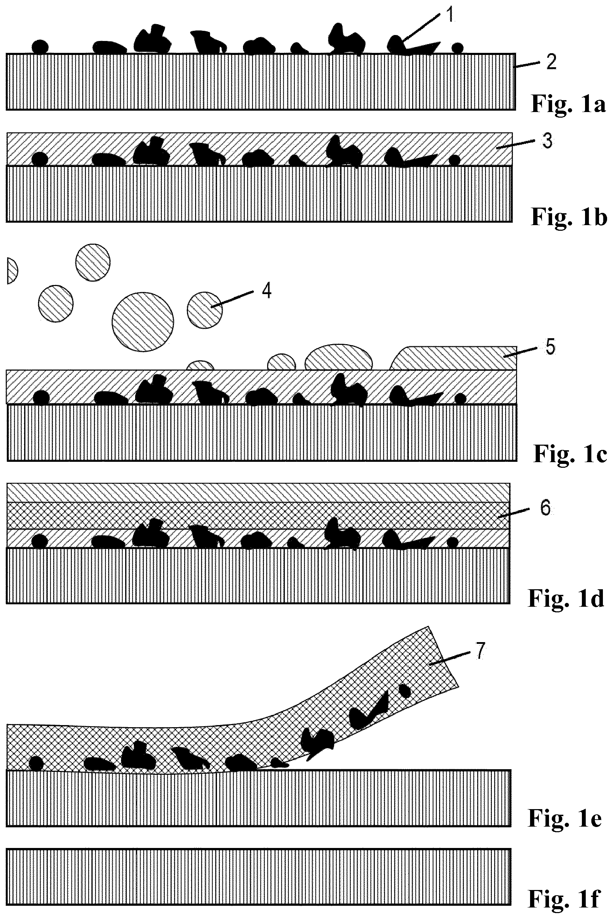

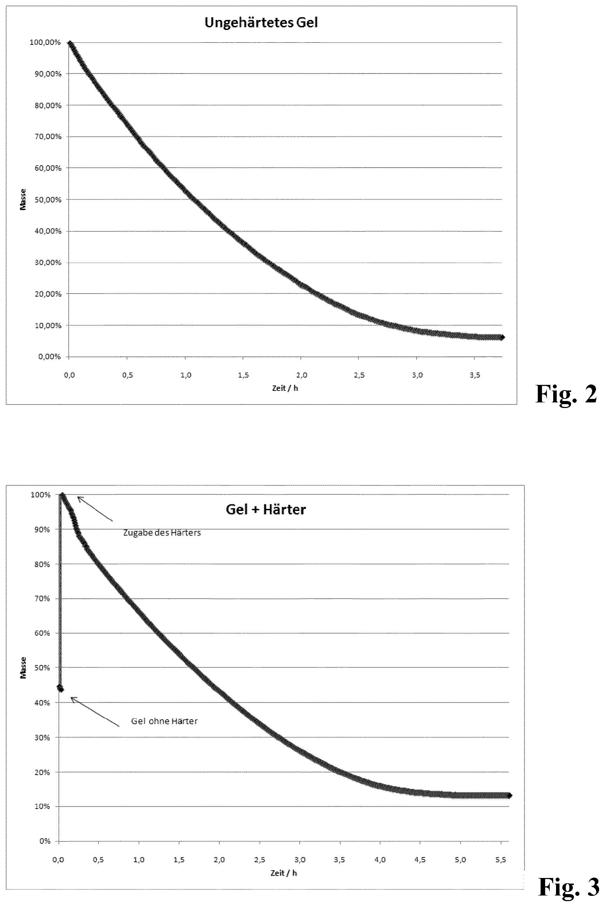

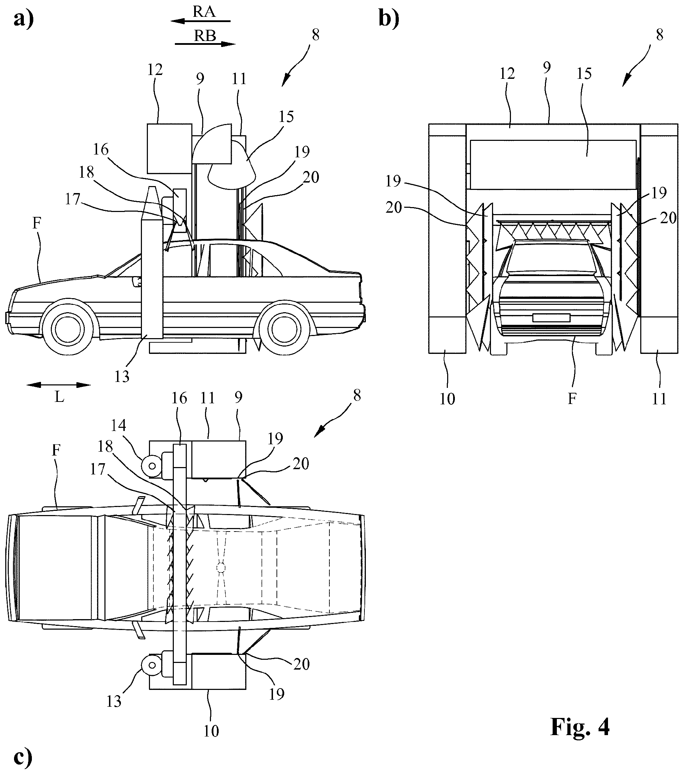

Der erfindungsgemäße Vorgang wird schematisch in Fig. 1 veranschaulicht. Fig. 1a zeigt die mit Schmutzteilchen 1 behaftete Lackoberfläche eines in Fig. 4 bis 6 gezeigten Fahrzeugs F. Im ersten Schritt des erfindungsgemäßen Verfahrens, dargestellt in Fig. 1b wird Komponente A, welche ein filmbildendes Polymer in einer im Wesentlichen wässrigen Lösung umfasst, auf die Oberfläche 2 durch Spritz- bzw. Sprühauftrag mindestens einmal appliziert. Das Spritzauftragen ist in diesem Fall nur ein Beispiel zur Applikation von Komponente A, auch Gardinen- bzw. Gießbeschichtung, Berieselung, Aufrollen, oder ein anderes für gelähnliche Flüssigkeiten geeignetes Verfahren kann eingesetzt werden. Allerdings darf die aufgetragene Gelschicht nicht so dick sein, dass sie in den folgenden Verfahrensschritten nicht mehr vollständig durchgehärtet wird. Die Komponente A besitzt im Übrigen eine solche Eigenviskosität, dass sie als Film 3, vgl. Fig. 1b, auf der Oberfläche verbleibt. Der aufgetragene Gelfilm hat einen Gewichtsverlust durch Trocknen bei Raumtemperatur von etwa 10% in einer Viertelstunde, vgl. Fig. 2. Dieser Wert kann aufgrund der Wahl der eingesetzten Stoffe um 1 bis 30 oder 5 bis 15 % variierten.

Anschließend wird, wie in Fig. 1c veranschaulicht, in einem Zeitraum von mindestens 100 ms, bevorzugt 100 ms bis 15 min, bevorzugter 1 s bis 5 min, besonders bevorzugt 5 s bis 30 s, die Komponente B, vgl. Fig. 1c, Bezugsziffer 4, der so genannte Härter, vorzugsweise durch Spritzauftrag mindestens einmal appliziert. Auch hier können die für die Applikation von Komponente A genannten weiteren Alternativen für ein Auftragungsverfahren eingesetzt werden. Es bildet sich die auf Schicht 3 (Komponente A) ruhende Schicht 5 aus Komponente B. Nach dem Auftragen beginnt an der Grenzfläche zwischen Schichten 3 und 5 vor allem durch Diffusion die Bildung des gehärteten Produkts aus Komponenten A und B, in Fig. 1d durch Schicht 6 veranschaulicht. Je nach Geschwindigkeit des Diffusionsvorgangs wird schließlich eine Durchhärtung erreicht. Der Zeitraum der Durchhärtung kann mindestens 1 s, bevorzugt 1 s bis 30 min, vorzugsweise 1 s bis 10 min, besonders bevorzugt 1 s bis 5 min, vor allem 1 s bis 1 min und weiter von 1 s bis 40 s betragen.

In Fig. 3 ist der Verlauf der prozentualen Gewichtsabnahme einer solchen Schicht dargestellt. Die Schicht ist zwar reißfest und folienartig, beinhaltet allerdings noch Lösemittel, im Wesentlichen Wasser, das in dem oben genannten Verarbeitungszeitraum bis zum Zustand, der in Fig. 1d dargestellt wird, zu einem überwiegenden Teil vorhanden ist. Nach erfolgter Durchhärtung wird die Schicht 7, wie in Fig. 1e veranschaulicht, mit einem Hochdruck-Wasserstrahl von der Oberfläche 2 flächig abgespült, so dass schließlich die von Schmutzpartikeln 1 befreite Fahrzeugoberfläche 2, wie in Fig. 1f dargestellt, vorliegt.

Nachstehend werden das Verfahren und das Reinigungsmittel zur Reinigung der Oberfläche eines Fahrzeugs gemäß der vorliegenden Erfindung genauer beschrieben.

Die in Fig. 4 bis 6 gezeigte erfindungsgemäße Fahrzeugwaschanlage 8 ist vorliegend als Portalwaschanlage mit einem in eine Längsrichtung L verfahrbaren Waschportal 9 mit Portalsäulen 10, 11 und einer diese verbindenden Portaltraverse 12 ausgebildet. Weiter sind vertikale Waschbürsten 13, 14 und eine horizontale Waschbürste 15 vorgesehen, welche in den Zeichnungen still stehen und nicht rotieren. Weiter ist ein drehbarer Dachtrockner 16 vorgesehen, welcher in an sich bekannter Weise um eine horizontale, quer zur Längsrichtung L verlaufende Drehachse drehbar ist, um möglichst frontal auf die quer zur Längsrichtung verlaufenden Oberflächen wie Front, Motorhaube, Front- und Heckscheibe, Dach, Kofferraumhaube und Heck gerichtet zu werden, damit der Trockenluftstrahl möglichst optimal auftrifft. Das Waschportal 9 verfährt zum Reinigen des Fahrzeugs F in bekannter Weise in Längsrichtung L ein- oder mehrmals vor- und zurück. Dabei verläuft die Waschrichtung parallel zur Längsrichtung L, abhängig von der aktuellen Fahrrichtung des Waschportals 9 aber in oder gegen die Längsrichtung L. Bei einer Waschstraße hingegen, in der das Fahrzeug F in Längsrichtung L transportiert wird, entspricht die Waschrichtung der Längsrichtung.

Eine solche Fahrzeugwaschanlage 8, die z. B. mit Bügel-Sprüh-Vorrichtungen als Auftragseinrichtungen ausgestattet ist, ist grundsätzlich bekannt und kann mit dem erfindungsgemäßen Reinigungsmittel verwendet werden. Beispiele für solche Fahrzeugwaschanlagen sind in DE 16 30 276 A1, DE 195 30 27 A1, DE 20 45 048 A1, DE 23 20 925 C2 oder DE 26 42 959 A1 beschrieben.

Die Erfindung kann aber ohne weiteres bei anderen Fahrzeugwaschanlagen eingesetzt werden, z.B. bei Waschstraßen mit Zwangsförderung des Fahrzeugs F, bei Bürstenwaschanlagen oder reinen Hochdruck-Fahrzeugwaschanlagen oder Kombinationen aller oder mehrerer solcher Waschanlagentypen.

Allgemein kann in einem ersten Schritt in der Regel eine Vorreinigung des Fahrzeugs F mit Wasser oder einer anderen Vorreinigungsflüssigkeit erfolgen. Dabei beginnt die Vorreinigung in der Regel an der Front des Fahrzeugs F, das Waschportal 9 fährt also in den Fig. 4 bis 6 a) und c) von links nach rechts bis zum Heck des Fahrzeugs F.

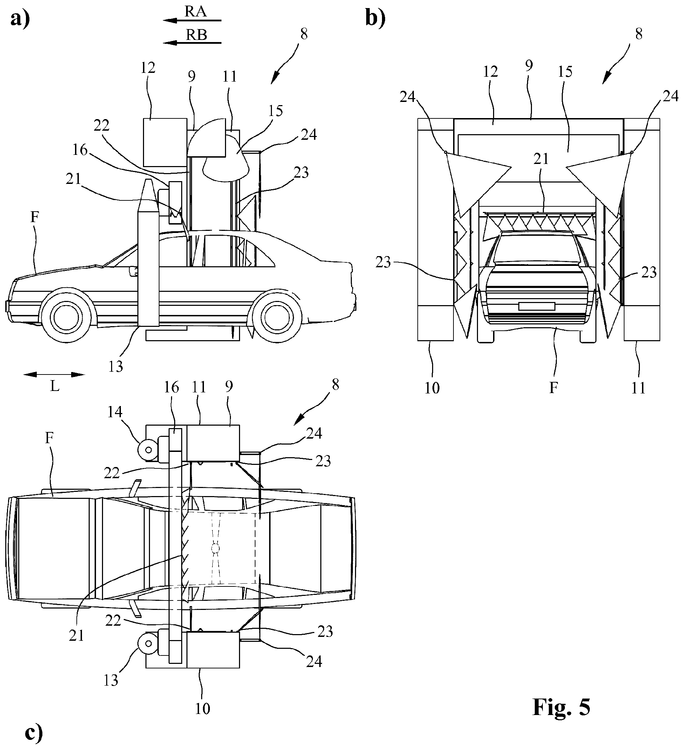

Danach beginnt bei den in den Fig. 4 und 5 dargestellten Reinigungsvorgängen die Reinigung am Heck des Fahrzeugs F, also von in Fig. 4, 5 a) und c) rechts, um durch die Überfahrt von hinten nach vorne die Komponente A oder beide Komponenten A und B aufbringen zu können.

Zum Aufbringen der beiden Komponenten A und B des Reinigungsmittels auf dem Fahrzeug F sind bei der in Fig. 4 gezeigten Ausführung am Dachtrockner 16 zwei Reihen Sprühdüsen 17, 18 aufweisende Sprühvorrichtungen angeordnet, wobei die in Fig. 4 a) und c) linken Sprühdüsen 17 die erste Komponente A und die rechten Sprühdüsen 18 die zweite Komponente B aufsprühen. Weiter weist die Sprühvorrichtung an den Portalsäulen 10, 11 angeordneten Reihen Sprühdüsen 19, 20 auf, wobei die in Fig. 4 a) und c) linken Sprühdüsen 19 die erste Komponente A und die rechten Sprühdüsen 20 die zweite Komponente B aufsprühen. Die Sprühdüsen 17, 19 bilden eine erste Auftragsvorrichtung für die erste Komponente A, während die Sprühdüsen 18, 20 eine zweite Auftragsvorrichtung für die zweite Komponente B ausbilden. Da in Fig. 4 b) die "hinteren" Sprühdüsen 19 nicht erkennbar sind, wird der durch diese erzeugte Sprühfächer ebenfalls mit der Bezugsziffer 19 bezeichnet. In Fig. 4 c) ist aus Gründen der Übersichtlichkeit die Portaltraverse 12 weggelassen.

Bei der in Fig. 5 gezeigten Ausführung hingegen sind zum gleichzeitigen Aufbringen der Komponente A auf alle Fahrzeugflächen am Dachtrockner 16 eine Reihe Sprühdüsen 21 und an den Portalsäulen 10, 11 in räumlicher Nähe zu den Sprühdüsen 21 weitere Sprühdüsen 22 angeordnet, um einen möglichst gleichzeitigen, allenfalls kurz hintereinander erfolgenden Auftrag der Komponente A sicherzustellen. Für die Komponente B hingegen sind zum einen am in Fig. 5 a) und c) rechten Ende der Portalsäulen 10, 11 seitliche Sprühdüsen 23 sowie oben an den Portalsäulen 10, 11 angeordnete Sprühdüsen 24 vorgesehen, welche wiederum den möglichst gleichzeitigen Auftrag der Komponente B ermöglichen. Die Sprühdüsen 21, 22 bilden eine erste Auftragsvorrichtung für die erste Komponente A, während die Sprühdüsen 23, 24 eine zweite Auftragsvorrichtung für die zweite Komponente B ausbilden.

Nach der optionalen Vorreinigung mit Wasser oder einen anderen Vorreinigungsflüssigkeit wird im zweiten Schritt eine wässrige Lösung von Komponente A mit den Sprühdüsen 17 und 19 bzw. 21 und 22 auf das Fahrzeug F gesprüht, sodass die Fahrzeugoberfläche vollständig mit einer Gelschicht versehen ist. Die Form des Versprühten aus den Sprühdüsen 17 und 19 bzw. 21 und 22 ist so ausgelegt, dass diese ausreicht, um die gesamte Karosserie mit einer wässrigen Lösung der Komponente A lückenlos zu bedecken, z.B. mit einem Sprühkegel.

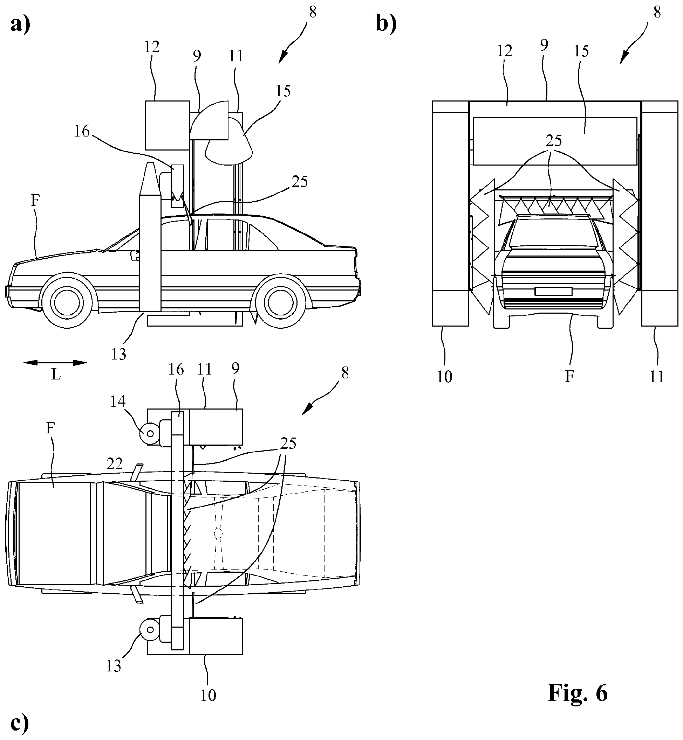

Komponente B wird dann mit Sprühdüsen 18 und 20 bzw. 23 und 24 flächendeckend auf den noch nassen Gelfilm von Komponente A aufgetragen. Auch hier erfolgt der Auftrag weitgehend flächendeckend. Während bei der vorliegenden gezeigten Portalwaschanlage 8 die Sprühvorrichtung(en) 17-24 über das Fahrzeug F wandern bzw. in einer kontinuierlichen Waschstraße das Fahrzeug F an den Sprühvorrichtungen vorbei wandert, entsteht nach den Sprühdüsen 18 und 20 bzw. 23 und 24 für die zweite Komponente B ein fester Film 7 auf der Karosserie des Fahrzeugs F. Dieser verfestigte, aber nicht vollends trockene Film 7 wird mit einem an sich bekannten Hochdruckstrahl 25 über eine weitere oder ggf. auch dieselbe Sprühvorrichtung bevorzugt mit einem oder mehreren rotierenden Punktstrahlen oder Flächenstrahlen von der Fahrzeugoberfläche wieder entfernt, wie in Fig. 6 angedeutet. Bevorzugt kann die Abreinigung mittels Hochdruckstrahl 25 auch durch den Einsatz von an sich bekannten Waschbürsten unterstützt werden.

Bei der in Fig. 4 gezeigten Ausführung wird in einem ersten Überfahrvorgang des Waschportals 9 vom Heck zur Front des Fahrzeugs F mittels der Sprühdüsen 17 und 19 zunächst die Komponente A auf dem Fahrzeug F aufgebracht. Anschließend fährt das Waschportal 9 entgegengesetzt von der Front zum Heck des Fahrzeugs F und appliziert dabei die Komponente B. Die Auftragsrichtungen der Komponenten A und B sind mit den Pfeilen RA und RB gekennzeichnet.

Nach dem oben und nachfolgend beschriebenen Aushärten der Gelschicht 7 bzw. des Films 7 wird diese dann mittels Wasserstrahl 25 bevorzugt flächig abgespült, wie in Fig. 6 gezeigt. Für das Absprühen können an sich bekannte Düsen, wie Vollkegeldüsen, Hohlkegeldüsen, Vollstrahldüsen, Nebeldüsen, Zweistoffdüsen, bevorzugt auch Flachstrahldüsen oder bewegte Punktdüsen verwendet werden. Anstelle von Wasser können auch andere geeignete Fluide verwendet werden.

Bei der in Fig. 4 gezeigten Ausführung können anstelle des oben beschriebenen Prozesses in einem ersten Überfahrvorgang des Waschportals 9 mittels der Sprühdüsen 17 bzw. 18 zunächst die quer zur Längsrichtung L verlaufenden Fahrzeugoberflächen mit den Komponenten A und B besprüht werden. Nach dem oben und nachfolgend beschriebenen Aushärten der Gelschicht 7 wird diese dann in einem eigenen Überfahrvorgang mittels Wasserstrahl 25 bevorzugt flächig abgespült, wie in Fig. 6 gezeigt und oben beschrieben. Anschließend werden in einer nachfolgenden Überfahrt des Waschportals 9 dann mittels der seitlichen Sprühdüsen 19 bzw. 20 wiederum die Komponenten A und B hintereinander aufgebracht und dann nochmals die wie oben und nachfolgend beschrieben ausgehärtete Gelschicht 7 wie oben beschrieben vom Fahrzeug F entfernt. Grundsätzlich kann dabei auch die Reihenfolge des Auftrags umgekehrt werden, also zuerst die Komponenten A und B mit den seitlichen Sprühdüsen 19 bzw. 20 auf die Seitenflächen aufgebracht, dann die Gelschicht 7 ein erstes Mal entfernt, anschließend die quer zur Längsrichtung L verlaufenden Fahrzeugoberflächen mit den Sprühdüsen 17 bzw. 18 mit den Komponenten A und B besprüht und abschließend die hierdurch neu gebildete Gelschicht 7 ein zweites Mal entfernt werden.

Bei der Ausführung nach Fig. 5 hingegen können in einer einzigen Überfahrt vom Heck zur Front des Fahrzeugs F die Komponenten A und B aufgetragen werden, da die in Auftragsrichtung RA räumlich vorauseilenden Sprühdüsen 21 und 22 alle Fahrzeugflächen quasi gleichzeitig mit Komponente A besprühen und zeitlich versetzt die in Auftragsrichtung RB räumlich nacheilenden Sprühdüsen 23 und 24 die mit Komponente A besprühten Fahrzeugflächen quasi gleichzeitig mit Komponente B besprühen. Diese Ausführung weist den Vorteil auf, dass nur eine statt zwei Überfahrten mit dem Waschportal 9 notwendig sind, um die Komponenten A und B auf das Fahrzeug F zu applizieren. Auch hier wird nach ausreichender Aushärtung die Gelschicht 7 wie oben beschrieben und in Fig. 6 gezeigt durch Absprühen vom Fahrzeug F entfernt.

Die oben beschriebene Reinigung mit dem Auftrag der beiden Komponenten A und B kann auch ohne Vorreinigung erfolgen, so dass die Reinigung vorteilhaft von der Front des Fahrzeugs F, also in Fig. 4 bis 6 a) und c) von links erfolgt. In diesen Fällen werden die Sprühdüsen für die Komponenten A und B vertauscht, damit zuerst die Komponente A und anschließend die Komponente B aufgetragen wird. Entsprechendes gilt, wenn für die Vorreinigung zwei Überfahrten des Waschportals 9 von vorne nach hinten und wieder zurück nach vorne erfolgen, so dass die Reinigung von der Front des Fahrzeugs F beginnt.

Komponente A hat gelartigen Charakter und sollte bevorzugt pH neutral oder alkalisch sein. Wesentlicher Inhaltsstoff ist eine organische Verbindung, die durch den Zusatz einer weiteren Komponente B im wässrigen Milieu einen verfestigten Film bildet. Im Gegensatz zu den in DE 27 22 390 A1 und DE 29 19 886 A1 beschriebenen Filmen ist dieser aus zwei Komponenten gebildete Film zwar fest aber nicht trocken, vgl. Fig. 3. Bevorzugt als organischer Stoff sind gelbildende organische Polysaccharide, zum Beispiel Alginsäure und deren wasserlösliche Salze, Carragenan, Xanthan, Traganth, Glucan oder Gelan sowie Gemische davon. Bevorzugt sind die wasserlöslichen Salze der Alginsäure, insbesondere Ammoniumalginat, Magnesiumalginat, Natriumalginat und/oder Kaliumalginat und/oder Gemische davon. Neben diesen natürlich vorkommenden Polysacchariden sind auch Polymere als Filmbildner und/oder Zusatz für Komponente A denkbar, wie Polyacrylate, Polycarboxylate (insbesondere auf Basis von Acrylsäure, Methacrylsäure oder Maleinsäure), modifizierte Polycarboxylaten (insbesondere auf Basis von Acrylsäure, Methacrylsäure oder Maleinsäure), oder Polyalkohole, insbesondere Polyvinylalkohole (PVA), Polyglykole, Polyvinylpyrrolidon sowie Gemische der vorgenannten Filmbildner mit geeigneter Struktur und ggfs. geeignetem Vernetzungsmittel. Handelsübliche Polymere in diesem Sinne sind Produkte der Firma BASF, beispielsweise jene der Sokalan(R)-Reihe, z.B. Sokalan CP, DCS, HP, IR oder PA, Produkte der Rheovis(R)-Reihe, z.B. Rheovis CDE, CSP, FRC, AT 120 oder TTA, Produkte der Lupasol(R)-Reihe, z.B. Lupasol FG, G, HF, P, PR, PN, PO, PS, SK, VT oder WF, Produkte der Euperlan(R)-Reihe, z.B. Euperlan HCO oder PO/N, Produkte der Polyquart(R)-Reihe, z.B. Polyquart Ampho 149, PRO A, Ecoclean, FDI oder SD09, Produkte der Soilfix(R)-Reihe, z.B. Soilfix IR, und Produkte der Tamol(R)-Reihe, z.B. Tamol NH, NN, DN oder PP. Diese Produkte können auch im Gemisch eingesetzt werden. Aus ökologischen Gründen sind die natürlich vorkommenden Polysaccharide, insbesondere Alginate, bevorzugt. Es ist von Vorteil, wenn Komponente A mindestens ein Tensid und/oder mindestens einen Entschäumer enthält.

Alginsäure ist ein Naturstoff. Sie wird vorwiegend aus Braunalgen gewonnen. In Europa gewinnt man in großen Mengen Alginsäure aus Laminaria-Algen der Nordsee. Alginsäure ist zudem ein kostengünstiger Rohstoff. Sie ist aus L-Guluronsäure und D-Mannuronsäure zusammengesetzt. Das mittlere Molgewicht kann im Bereich von etwa 30 000 bis etwa 300 000 liegen. Alginsäure ist in Wasser zwar im Wesentlichen unlöslich, ihre Salze (Alginate) mit Alkalimetallen sind jedoch in Wasser löslich. Bekannt sind Natrium- und Kaliumalginat. Diese werden u.a. in der Lebensmittelindustrie verwendet. Aber auch Ammoniumalginat ist in Wasser löslich. Wässrige Natriumalginatlösungen mit einem Anteil von mehr als 4% sind in der Regel zur Verarbeitung durch Versprühen zu viskös. Handelsübliche Alginate werden in mehreren Viskositätstypen angeboten, mit hoher Viskosität, mittlerer und niederer Viskosität. Die Typen richten sich nach der Herkunft, z.B. ob das Alginat aus dem Stängel oder den Blättern der Alge gewonnen wurde, und von Bedeutung ist auch die Art der verwendeten Alge, z.B. Laminaria hyperborea, Laminaria nignenscens, Laminaria trabeculata, Durvillaea antarctica, Laminaria digitata, Ecklonia maxima, Macrocystis pyrifera, Ascophyllum nodosum oder Laminaria japonica. Je nach Typ können Konzentrationen von 3,0% Alginat eine Viskosität von 10000, 24000 oder 38000 mPas, Konzentrationen von 2,0% eine Viskosität von 3000, 6000 oder 11000 mPas und Konzentrationen von 1,5% eine Viskosität von 1000, 3000 bzw. 5000 mPas aufweisen. Die Viskosität der Alginatlösung ist temperaturabhängig und nimmt mit zunehmender Lösungstemperatur ab.

Alginatgel kann als teilweise feste und teilweise flüssige Lösung aufgefasst werden. Wasser und andere Moleküle sind physikalisch in der Alginatmatrix durch Kapillarkräfte eingeschlossen. In Abhängigkeit von der Größe verbleiben die eingeschlossenen Moleküle jedoch migrationsfähig und diffusionsfähig. Aus diesem Grunde können Alginate weitere Stoffe aufnehmern, einschließen und/oder einkapseln.

Alginate sind in kaltem Wasser löslich und müssen nicht erwärmt und dann abgekühlt werden, um Gele zu bilden, wie es bei manchen anderen Biopolymeren (z.B. Traganth, Carrgeen, Agarose, Xathan, Gellan, Glucan u.a.) der Fall ist. Sollten andere Biopolymere eingesetzt werden, ist ein Gemisch mit Alginat von Vorteil. Die Gele können so eingestellt werden, dass verschiedene Eigenschaften erzielt werden, wie hart, spröde bis weich und schmiegsam. Bevorzugt ist ein wässriger, halbfester, sich an die Oberfläche anschmiegender Film aus Alginatgel.

Das Polymer der Komponente A, hier das Alginat, ist für die Funktion des Gels im Filmbildungsvorgang unverzichtbar. Gele mit sehr niedrigem Alginatgehalt härten nicht mehr brauchbar aus. Die Reinigungsleistung nimmt tendenziell mit steigendem Alginatgehalt zu. Auf Grund der stark verdickenden Eigenschaften der Alginate sind Gele mit sehr hohem Alginatgehalt im Verfahren aber problematisch zu handhaben. Aus diesem Grunde ist ein Gehalt an Alginat von 0,05 bis 10 %, vorzugsweise 0,5 bis 8 %, besonders bevorzugt 1 bis 4 %, je nach eingesetzter Polymerart zu verwenden. Für Natriumalginat ist eine Menge von 1 bis 4 % bevorzugt. Für andere Polymere können diese Angaben für den Gehalt 1 bis 50% höher oder geringer ausfallen. Die Prozentangaben innerhalb der Beschreibung sind auf das Gewicht bezogen, sofern nicht anders angegeben.

Die Viskosität des Gels von Komponente A variiert, wie vorstehend erläutert, stark mit dem Alginatgehalt und der Provenienz des Alginats. Andere Polymere haben einen deutlich geringeren Effekt. Die Viskosität eines Alginatgels kann durch Zusatz weiterer Polymere gegebenenfalls vermindert werden. Lösemittel können die Viskosität des Gels erhöhen, sofern sie gut wasserlöslich sind. Die Viskosität des Gels ist aus verfahrenstechnischen Gründen vor der Härtung wünschenswerterweise möglichst niedrig. Gründe dafür sind die Forderungen nach möglichst guter Benetzung von Oberfläche und Schmutzpartikeln durch das Gel, schnellem Verlauf auf der Oberfläche und Applikation im Sprühauftrag. Dies konkurriert mit der beobachteten erhöhten Abreinigung durch hohen Alginatgehalt, sodass durch Einstellung der jeweiligen Bestandteile von Komponente A in jedem Fall ein Optimum zu ermitteln ist. Ein Gel mit geringem Alginatgehalt hat beispielsweise in der Regel Viskositäten zwischen 100 und 1000 mPas. Die Applikation ist hier technisch einfach möglich - die Reinigungsleistung ist aber niedriger als bei höherem Alginatgehalt. Bei höherem Alginatgehat steigt die Viskosität tatsächlich drastisch an, und erreicht mit Kleistern, Dispersionsfarben oder ähnlichem vergleichbare Werte. Applikation ist dann nur noch mit spezieller Ausrüstung (z.B: Lackierpistole mit druckbeaufschlagtem Becher) möglich. Die Reinigungsleistung ist jedoch höher. Insbesondere Gele von Komponente A mit hohem Alginatgehalt weisen zusätzlich ausgeprägte Scherverflüssigung bzw. Scherentzähung auf. Das könnte ein Grund dafür sein, dass sie trotz der hohen Viskosität sprühapplizierbar sind.

Komponente B (Härter) ist eine wässrige Lösung eines Stoffes, der mit der Gelschicht aus Komponente A einen festen Film bildet. Komponente B als Härter kann ein wasserlösliches Salz eines mehrwertigen Kations, wässrige Säure und/oder ein wasserlösliches Lösemittel sein. Mehrwertige Metallsalze, die einen wasserunlöslichen Film mit Komponente A bilden können, sind vorzugsweise ausgewählt aus Calcium-, Strontium-, Barium-, Eisen (II) oder (III)-, Zink oder Alumninium-Salzen oder beliebigen Gemischen davon. Insbesondere eignen sich im Fall von Biopolymeren wässrige Lösungen von Calciumsalzen, wie Calciumchlorid, Calciumnitrat oder Calciumlactat oder entsprechenden Aluminiumsalzen. Äquivalente Strontium- oder Bariumsalze sind ebenfalls verwendbar, weisen aber gegenüber Calciumsalzen oder Aluminiumsalzen Nachteile auf, z.B. höhere Kosten oder schlechtere Umweltverträglichkeit. Vor allem mit Alginat bzw. Carrageen bilden Calciumsalze feste Filme. Calciumionen vernetzen die gelösten Polymere untereinander und bilden somit höhere Aggregate, die letztlich feste Körper bilden. Diese festen Filme umschließen Schmutzpartikel oder binden sie über andere physikalische Phänomene. PVA und andere Polyhydroxide vernetzen auch mit Borat.

Es sollte im Härter eine Konzentration von mindestens 30 mMol/l (Ca2+) vorliegen, um eine merkliche Härtung zu erreichen. Für eine effektive Härtung sind mindestens 50 mMol/l notwendig. Höhere Konzentrationen sind in jedem Fall förderlich. Nur leichtlösliche Ca2+ Salze wirken auf den Film härtend. Als nützlich erwiesen sich Ca(NO3)2 und CaCl2 sowie durch Auflösen von CaCO3 in Säuren (H3PO4 und HCl) hergestellte Salzlösungen.

Alternativ härtet der Natriumalginatfilm auch durch Säureeinwirkung (Säure als Härter). Prinzipiell kann hierfür eine beliebige Säure eingesetzt werden, die zum Ausfällen der Alginsäure fähig ist. Es wird ein pH von höchstens 3 benötigt, um eine effektive Härtung zu erreichen. Stärker saure Härter sind i.d.R. wirkungsvoller als schwach Saure. Die maximal mögliche Konzentration/Wirkung eines sauren Härters wird durch die äußeren Rahmenbedingungen limitiert (Wirtschaftlichkeit, Korrosion, gefahrstoffrechtliche Aspekte usw.). Es findet im Wesentlichen eine Säureverdrängung statt und die im Wasser wesentlich schlechter lösliche Alginsäure bildet einen Film. In Frage kommen Mineralsäuren, wie Phosphorsäure oder Salzsäure, bevorzugt sind jedoch biologisch verträgliche und geruchsfreie organische Säuren, wie Zitronensäure, Sulfaminsäure oder Gluconsäure. Davon bevorzugt sind umweltverträgliche Stoffe, wie Zitronensäure oder Gluconsäure.

Durch Aufsprühen von wasserlöslichen Lösemitteln, wie Ethanol, auf den Natriumalginatfilm kann ebenfalls eine Filmhärtung hervorgerufen werden. Dabei entzieht das Ethanol dem Gelfilm Wasser und ruft eine Verfestigung hervor. Für sich alleine ist eine Härtung des Gels mit Lösemitteln wenig erfolgversprechend. Der Zusatz von 5 - 10 % Lösemittel zu einem Härter ist allerdings ggfs. förderlich auf dessen Wirkung, jedoch nicht unbedingt notwendig. Der Einsatz von Ethanol und Isopropanol hat sich als wirksam erwiesen.

Die Viskosität von Komponente B ist regelmäßig gering (etwa vergleichbar mit Wasser). Lösemittel wirken leicht verdünnend, andere Inhaltsstoffe leicht verdickend. Bei den angestrebten Konzentrationen (Komponente B in Anwendungskonzentration) sind beide Effekte gering.

Der Härter kann für einen endgültigen Einsatz als Konzentrat formuliert und vor Anwendung verdünnt werden.

Nach dem Versetzen von Komponente A mit Komponente B entsteht ein ausgehärteter Film, der im Gegensatz zu den Komponenten A und B, kein Fluid mehr darstellt. Das gehärtete Gel weist zusätzlich Filmkohärenz, Zugfestigkeit usw. auf, d.h. der entstandene Film ist in groben Zügen vergleichbar mit z.B. Lacken, Klebstoffen, Elastomeren usw. Alginat in der Komponente A verfügt über eine Vielzahl von Gelbildungsmöglichkeiten, von denen die häufigste die Diffusionshärtung ist. Bei der Diffusionshärtung wird bei neutralem pH eine Alginatlösung - z.B. aufgetragen auf eine Oberfläche - mit einer Calciumsalzlösung besprüht. Die Calciumionen diffundieren in die Lösung und bilden ein Calcium-Alginat-Gel. Die Diffusionsrate kann durch Anheben der Calciumkonzentration oder durch den Einsatz eines besonders Calcium-reaktiven Alginats, wie ein Alginat mit einem besonders hohen Anteil an Guluronsäure-Blöcken, erhöht werden. Das Diffusionssystem kann auch durch pH-Senkung (Säure) oder Wasserentzug (dehydratisierendes Lösungsmittel, wie Ethanol) ausgelöst werden.

Sowohl die Komponente A als auch die Komponente B können Zusatzstoffe enthalten.

Komponente A kann zur Unterstützung der Schmutzentfernung mit einem Reinigungspolymer versetzt werden. Vorzugsweise wird ein Reinigungspolymer auf Acrylat-Basis in einer Menge von 0,05 bis 10%, vorzugsweise in einer Menge von 0,1 bis 8 %, besonders bevorzugt in einer Menge von 0,5 bis 5 % verwendet.

Zur Einstellung der rheologischen Eigenschaften von Komponente A können Hilfsstoffe zugesetzt werden. Neben den vorgenannten Biopolymeren können dafür auch Polyacrylate, Polycarbonsäurepolymere, Polyvinylalkohol (PVA), Zellulosederivate oder dergleichen eingesetzt werden. Bevorzugt ist ein Zusatz von PVA in einer Konzentration von 3%. Neben Wasser als Hauptlösemittel kann ein lösevermittelndes Colösemittel verwendet werden. Durch den Zusatz eines Colösemittels können auch Viskosität und Coaleszenz des Gelfilms modifiziert werden. Als Colösemittel sind Glykolether bevorzugt, insbesondere Propylenglykolether, beispielsweise solche der DOWANOL-Reihe.

Zur Stabilisierung der Lösung der Komponente A und für ein besseres Spreitvermögen auf dem Karosserielack können der Komponente A Tenside als Netzmittel zugesetzt werden. Tenside in einer Menge von 0,1 bis 10 %, vorzugsweise in einer Menge von 0,1 bis 1 % eingesetzt. Beispielsweise sind die Tenside Silikontenside. Da der Gelfilm von Komponente A möglichst glatt und blasenfrei aufgebracht werden sollte, sind Entschäumer ein nützlicher Zusatz. Entschäumer in einer Menge von 0,1 bis 2% sind für diesen Zweck bevorzugt. In diesem Zusammenhang sollte angemerkt werden, dass die Tenside nicht nur als Netzmittel eingesetzt werden, sondern auch zur Steigerung der Reinigungswirkung zugesetzt werden. Falls Tenside zur Reinigungsunterstützung zugesetzt werden, sind gegebenenfalls höhere Konzentrationen sinnvoll.

Weitere nützliche Zusätze sind Farbstoffe, Konservierungsstoffe und Duftstoffe, die in einer Menge von weniger als 1 % zugesetzt werden können. Als Konservierungsmittel können Sorbinsäure, Kaliumsorbat, Benzoesäure, Natriumbenzoat oder Ester von Hydroxybenzoesäure eingesetzt werden.

Alle Härter, d.h. Komponente B, enthalten zusätzlich ein Tensid in geringer Menge (z.B. 0,005 bis 1 %, vorzugsweise 0,01 bis 0,8%, besonders bevorzugt 0,1 - 0,5 %) als Netzmittel. Der Härter kann auch als Konzentrat formuliert werden.

Nachdem die Komponenten A und B, welche Fluide (wenn auch möglicherweise hochviskös) sein müssen, nacheinander auf die Karosserie aufgetragen wurden, härtet in kurzer Zeit ein Film aus. Das ausgehärtete Gel kann in der Fahrzeugwaschanlage idealerweise mit Schwallwasser sicher jedoch mit einem HD-Flachstrahl abgezogen werden. Der gehärtete Film darf allerdings nicht mehr flüssig sein; er ist gewöhnlich ein deutlich viskoelastischer Festkörper. Grundlage für die Härtung ist eine, wie vorstehend erläuterte, chemische oder physikochemische Reaktion von Komponente A mit Komponente B. Nach einem initalen Aufreißen des Gels ist ein effektiver Entfernungsprozess ein Abschälen des Films durch den Wasserstrahl. Ist die Haftung des Gels im ausgehärteten Zustand noch zu hoch, so ist eine vollständige Abreingbarkeit nicht mehr gegeben. Dies kann z.B. durch problematische Inhaltsstoffe im Gel oder unzureichende Härtung eintreten. Ein solches Gel kann nicht als Film abgezogen werden. Es reißt innerhalb des Films auf (nicht zwischen Film und Oberfläche), wobei eine dünne Schicht auf dem zu reinigenden Substrat verbleibt. Aus diesem Grunde muss ein solches Verhalten durch geeignete Einstellung von Komponenten und Aufbringungszeiten ausgeschlossen werden.

### Beispiele

Nachstehend ist ein typisches Gel für Reinigungsaufgaben (Komponente A) angegeben.

| Inhaltsstoff | Menge | Funktion |
|---|---|---|
| Natrium Alginat | 1 - 4 % | Härtbarkeit |
| Reinigungspolymer | 0 - 5 % | Unterstützung der Schmutzentfernung |
| Weitere Polymere | 0 - 3 % | Falls notwendig Modifikation von Filmeigenschaften und Rheologie |
| Lösemittel | 0 - 5 % | Colösemittel. Gegebenenfalls Modifikation von Viskosität und Coaleszenz |
| Wasser | 80 - 95 % | Lösemittel |
| Silicontensid | 0,1 - 1 % | Netzmittel |
| Siliconentschäumer | 0,1 - 2 % | Entschäumer |
| Farbstoff(e) | < 1 % | |
| Konservierungsstoff(e) | < 1 % | |
| Duftstoff(e) | < 1 % | |

Während des Lösevorgangs ist es wichtig, dass das Wasser stark gerührt wird, während das Alginatpulver hinzugefügt wird. Bis zur kompletten Hydratation können 5 bis 20 Minuten vergehen. Vorvermischen mit anderen Stoffen kann die Auflösung stören, z.B. Zugabe von VOC, insbesondere Ethanol oder PEG oder andere Stoffe. Erforderliche Zusätze, wie vorstehend beschrieben, sind daher auf dieses Verhalten abzustimmen. Aus diesem Grunde sind die Mengen im vorliegenden Beispiel variabel angegeben, da sich der konkrete Wert nach den Eigenschaften des eingesetzten Alginats richtet. Das Produkt wird als einsatzfähiges Produkt formuliert.

Zur Härtung wird eine 50 mMol/l Calciumchlorid-Lösung mit einem Tensidzusatz eingesetzt.

### Bezugszeichen

- 1: Schmutzteilchen, Schmutzpartikel
- 2: Fahrzeugoberfläche
- 3: Schicht aus Komponente A
- 4: Komponente B (Härter)
- 5: Schicht aus Komponente B
- 6: Schichtbildung aus Komponenten A und B
- 7: durchgehärtete Schicht bzw. Film aus Komponenten A und B
- 8: Fahrzeugwaschanlage
- 9: verfahrbares Waschportal
- 10, 11: Portalsäulen
- 12: Portaltraverse
- 13, 14: vertikale Waschbürsten
- 15: horizontale Waschbürste
- 16: drehbarer Dachtrockner
- 17: obere Sprühdüsen für Komponente A
- 18: obere Sprühdüsen für Komponente B
- 19: seitliche Sprühdüsen für Komponente A
- 20: seitliche Sprühdüsen für Komponente B
- 21: obere Sprühdüsen für Komponente A
- 22: seitliche Sprühdüsen für Komponente A
- 23: seitliche Sprühdüsen für Komponente B
- 24: obere Sprühdüsen für Komponente B
- 25: Wasserstrahl

- L: Längsrichtung
- F: Fahrzeug
- RA: Auftragsrichtung Komponente A
- RB: Auftragsrichtung Komponente B

## Patentansprüche

1. Fahrzeugwaschanlage (8) zur Reinigung eines Fahrzeugs (F), wobei eine Auftragseinrichtung (17-24) zum Aufbringen einer ersten Komponente A, umfassend mindestens ein filmbildendes Polymer in einer im Wesentlichen wässrigen Lösung, und zum Aufbringen einer zweiten Komponente B, umfassend mindestens einen Härter in einer im Wesentlichen wässrigen Lösung, vorgesehen ist, und wobei die Auftragseinrichtung (17-24) eine erste Auftragsvorrichtung (17, 19; 21, 22) zum Aufbringen der mindestens einen Komponente A und eine zweite Auftragsvorrichtung (18, 20; 23, 24) zum Aufbringen der mindestens einen Komponente B aufweist, wobei die erste Auftragsvorrichtung (17, 19; 21, 22) in Waschrichtung räumlich vor der zweiten Auftragsvorrichtung (18, 20; 23, 24) angeordnet ist.

2. Fahrzeugwaschanlage (8) nach Anspruch 1, **dadurch gekennzeichnet, dass** sie eine Vorrichtung, insbesondere eine weitere Auftragsvorrichtung, zum Abreinigen der aus Komponente A und B gebildeten Schicht (7) mit einem Nachreinigungsfluid (25), insbesondere Wasser, aufweist.

3. Verfahren zur Reinigung eines Fahrzeugs (F), wobei eine erste Komponente A, umfassend mindestens ein filmbildendes Polymer in einer im Wesentlichen wässrigen Lösung, mindestens einmal auf das Fahrzeug (F) aufgetragen wird und anschließend durch mindestens einmaliges Auftragen einer Komponente B, umfassend mindestens einen Härter in einer im Wesentlichen wässrigen Lösung, ein fester oder gelartiger Film (7) erzeugt wird, welcher schließlich mit druckbeaufschlagtem Nachreinigungsfluid (25) und/oder Waschbürsten entfernt wird, wobei die Komponente B höchstens 15 min nach dem Auftrag von Komponente A appliziert wird, und nach Auftrag der Komponente B höchstens 30 min mit der Abreinigung der aus Komponenten A und B gebildeten Schicht (7) gewartet wird.

4. Verfahren nach Anspruch 3, wobei das Fahrzeug (F) vor dem Auftragen der ersten Komponente A mit Vorreinigungsfluid vorgereinigt wird.

5. Verfahren nach Anspruch 3 oder 4, wobei das Vorreinigungsfluid und/oder das Nachreinigungsfluid Wasser ist.

6. Verfahren nach Anspruch 3, 4 oder 5, wobei die Komponente B mehrfach hintereinander aufgebracht wird.

7. Verfahren nach einem der Ansprüche 3 bis 6, wobei die Komponenten A und B im Wesentlichen zur gleichen Zeit, aber räumlich zueinander versetzt aufgebracht werden, wobei die Komponente A räumlich vorauseilend aufgebracht wird.

8. Verfahren nach einem der Ansprüche 3 bis 7, wobei die Komponente B frühestens 100 ms, bevorzugter frühestens 1 s, und besonders bevorzugt frühestens 5 s nach dem Auftrag von Komponente A appliziert wird, und/oder wobei die Komponente B höchstens 5 min, und besonders bevorzugt höchstens 30 s nach dem Auftrag von Komponente A appliziert wird.

9. Verfahren nach einem der Ansprüche 3 bis 8, wobei nach dem Auftrag der Komponente B mindestens 1 s mit der Abreinigung der aus Komponente A und B gebildeten Schicht (7) gewartet wird, und/oder wobei nach dem Auftrag der Komponente B höchstens 10 min, bevorzugt höchstens 5 min, vor allem höchstens 1 min, und vorteilhaft höchstens 40 s mit der Abreinigung der aus Komponenten A und B gebildeten Schicht (7) gewartet wird.

10. Verfahren nach einem der Ansprüche 3 bis 9, wobei in Komponente A das mindestens eine filmbildende Polymer aus Polysacchariden, modifizierten Polysacchariden, Polycarboxylaten (insbesondere auf Basis von Acrylsäure, Methacrylsäure oder Maleinsäure), modifizierten Polycarboxylaten (insbesondere auf Basis von Acrylsäure, Methacrylsäure oder Maleinsäure), Polyalkoholen (insbesondere Polyvinylalkohol), Polyglykolen, Polyvinylpyrrolidon und Gemischen sowie Copolymeren davon, ausgewählt ist.

11. Verfahren nach Anspruch 10, wobei Komponente A Ammoniumalginat, Magnesiumalginat, Natriumalginat und/oder Kaliumalginat und/oder Gemische davon umfasst.

12. Verfahren nach einem der Ansprüche 3 bis 11, wobei Komponente B als den mindestens einen Härter einen Stoff umfasst, der ausgewählt ist aus der Gruppe bestehend aus einem wasserlöslichen Salz eines mehrwertigen Kations, einer Säure, einem wasserlöslichen Salz und Gemischen davon.

13. Verfahren nach Anspruch 12, wobei ein Calciumsalz, insbesondere Calciumnitrat, Calciumchlorid, Calciumlactat oder Gemische davon, verwendet wird.

14. Verfahren nach einem der Ansprüche 3 bis 13, wobei Komponente A mindestens ein Tensid und/oder mindestens einen Entschäumer enthält.

## Claims

1. A vehicle washing installation (8) for cleaning a vehicle (F), wherein application equipment (17-24) is provided for applying a first component A, comprising at least one film-forming polymer in a substantially aqueous solution, and for applying a second component B, comprising at least one hardener in a substantially aqueous solution, and wherein the application equipment (17-24) includes a first application device (17, 19; 21, 22) for applying the at least one first component A and a second application device (18, 20; 23, 24) for applying the at least one second component B, wherein the first application device (17, 19; 21, 22) is disposed in the washing direction spatially upstream of the second application device (18, 20; 23, 24).

2. The vehicle washing installation (8) of claim 1, **characterized in that** it includes a device, in particular a further application device, for removing the layer (7) formed by components A and B using a post-cleaning fluid (25), in particular water.

3. A method for cleaning a vehicle (F), wherein a first component A, comprising at least one film-forming polymer in a substantially aqueous solution, is applied at least once onto the vehicle (F) and subsequently a solid or gel-like film (7) is generated by applying at least once a second component B, comprising at least one hardener in a substantially aqueous solution, and finally the generated film (7) is removed using pressurized post-cleaning fluid (25) and/or washing brushes, wherein component B is applied no more than 15 min after applying component A, and after applying component B a waiting time of no more than 30 min is applied before the film (7) formed from components A and B is removed.

4. The method of claim 3, wherein the vehicle (F) is pre-cleaned with pre-cleaning fluid prior to the application of the first component A.

5. The method of claim 3 or 4, wherein the pre-cleaning fluid and/or the post-cleaning fluid is water.

6. The method of claim 3, 4 or 5, wherein component B is applied several times in succession.

7. The method of one of claims 3 through 6, wherein components A and B are applied substantially at the same time, but spatially offset from each other, with component A being applied spatially ahead.

8. The method of one of claims 3 through 7, wherein component B is applied no earlier than 100 ms, preferably no earlier than 1 s and particularly preferably no earlier than 5 s after the application of component A, and/or wherein component B is applied no more than 5 min, and preferably no more than 30 s after the application of component A.

9. The method of one of claims 3 through 8, wherein there is a waiting time of at least 1 s after the application of component B before the film (7) formed from components A and B is removed, and/or wherein after the application of component B, a waiting time of no more than 10 min, preferably no more than 5 min, above all no more than 1 min, and advantageously no more than 40 s is applied before the film (7) formed from components A and B is removed.

10. The method of one of claims 3 through 9, wherein in component A, the at least one film-forming polymer is selected from polysaccharides, modified polysaccharides, polycarboxylates (in particular on the basis of acrylic acid, methacrylic acid or maleic acid), modified polycarboxylates (in particular on the basis of acrylic acid, methacrylic acid or maleic acid), polyalcohols (in particular polyvinyl alcohol), polyglycols, polyvinylpyrrolidone and mixtures as well as copolymers thereof.

11. The method of claim 10, wherein component A comprises ammonium alginate, magnesium alginate, sodium alginate and/or potassium alginate and/or mixtures thereof.

12. The method of one of claims 3 through 11, wherein component B comprises a substance as the at least one hardener, which is selected from the group consisting of a water-soluble salt of a polyvalent cation, an acid, a water-soluble salt and mixtures thereof.

13. The method of claim 12, wherein a calcium salt, in particular calcium nitrate, calcium chloride, calcium lactate or mixtures thereof is used.

14. The method of one of claims 3 through 13, wherein component A contains at least one surfactant and/or at least one defoamer.

## Revendications

1. Station de lavage de véhicules (8) pour le nettoyage d'un véhicule (F), dans laquelle un appareil d'application (17-24) pour l'application d'un premier composant A, comprenant au moins un polymère filmogène dans une solution essentiellement aqueuse, et pour l'application d'un deuxième composant B, comprenant au moins un durcisseur dans une solution essentiellement aqueuse, est prévu, et dans laquelle l'appareil d'application (17-24) comprend un premier dispositif d'application (17, 19 ; 21, 22) pour l'application dudit au moins un composant A et un deuxième dispositif d'application (18, 20 ; 23, 24) pour l'application dudit au moins un composant B, dans lequel le premier dispositif d'application (17, 19 ; 21, 22) est agencé avant le deuxième dispositif d'application (18, 20 ; 23, 24) dans l'espace dans la direction du lavage.

2. Station de lavage de véhicules (8) selon la revendication 1, **caractérisée en ce qu'**elle comprend un dispositif, notamment un dispositif d'application supplémentaire, pour l'élimination de la couche (7) formée par les composants A et B avec un fluide de post-nettoyage (25), notamment de l'eau.

3. Procédé de nettoyage d'un véhicule (F), dans lequel un premier composant A, comprenant au moins un polymère filmogène dans une solution essentiellement aqueuse, est appliqué au moins à une reprise sur le véhicule (F), puis, par application au moins à une reprise d'un composant B, comprenant au moins un durcisseur dans une solution essentiellement aqueuse, un film solide ou en gel (7) est formé, qui est enfin éliminé avec un fluide de post-nettoyage (25) sous pression et/ou avec des brosses de lavage, le composant B étant appliqué au plus 15 minutes après l'application du composant A, et une durée d'au plus 30 minutes étant attendue après l'application du composant B avant l'élimination de la couche (7) formée par les composants A et B.

4. Procédé selon la revendication 3, dans lequel le véhicule (F) est pré-nettoyé avec un fluide de pré-nettoyage avant l'application du premier composant A.

5. Procédé selon la revendication 3 ou 4, dans lequel le fluide de pré-nettoyage et/ou le fluide de post-nettoyage sont l'eau.

6. Procédé selon la revendication 3, 4 ou 5, dans lequel le composant B est appliqué successivement à plusieurs reprises.

7. Procédé selon l'une quelconque des revendications 3 à 6, dans lequel les composants A et B sont appliqués essentiellement simultanément, mais décalés l'un par rapport à l'autre dans l'espace, le composant A étant appliqué avant dans l'espace.

8. Procédé selon l'une quelconque des revendications 3 à 7, dans lequel le composant B est appliqué au plus tôt 100 ms, de préférence au plus tôt 1 s et de manière particulièrement préférée au plus tôt 5 s après l'application du composant A et/ou dans lequel le composant B est appliqué au plus 5 minutes et de manière particulièrement préférée au plus 30 s après l'application du composant A.

9. Procédé selon l'une quelconque des revendications 3 à 8, dans lequel une durée d'au moins 1 s est attendue après l'application du composant B avant l'élimination de la couche (7) formée par les composants A et B et/ou dans lequel une durée d'au plus 10 minutes, de préférence d'au plus 5 minutes, avant tout d'au plus 1 minute et avantageusement d'au plus 40 s est attendue après l'application du composant B avant l'élimination de la couche (7) formée par les composants A et B.

10. Procédé selon l'une quelconque des revendications 3 à 9, dans lequel ledit au moins un polymère filmogène dans le composant A est choisi parmi les polysaccharides, les polysaccharides modifiés, les polycarboxylates (notamment à base d'acide acrylique, d'acide méthacrylique ou d'acide maléique), les polycarboxylates modifiés (notamment à base d'acide acrylique, d'acide méthacrylique ou d'acide maléique), les polyalcools (notamment l'alcool polyvinylique), les polyglycols, la polyvinylpyrrolidone et leurs mélanges et copolymères.

11. Procédé selon la revendication 10, dans lequel le composant A comprend de l'alginate d'ammonium, de l'alginate de magnésium, de l'alginate de sodium et/ou de l'alginate de potassium et/ou leurs mélanges.

12. Procédé selon l'une quelconque des revendications 3 à 11, dans lequel le composant B comprend en tant que ledit au moins un durcisseur une substance qui est choisie dans le groupe constitué par un sel soluble dans l'eau d'un cation polyvalent, un acide, un sel soluble dans l'eau et leurs mélanges.

13. Procédé selon la revendication 12, dans lequel un sel de calcium, notamment le nitrate de calcium, le chlorure de calcium, le lactate de calcium ou un de leurs mélanges est utilisé.

14. Procédé selon l'une quelconque des revendications 3 à 13, dans lequel le composant A contient au moins un tensioactif et/ou au moins un antimousse.
